# EUROPÄISCHE PATENTSCHRIFT

(11) **EP 1 851 456 B1**
(45) Veröffentlichungstag und Bekanntmachung des Hinweises auf die Patenterteilung: **16.02.2011**
(21) Anmeldenummer: 06707028.4
(22) Anmeldetag: 17.02.2006
(51) Int. Cl.: F16C 33/66

(54) **VORRICHTUNG**
DEVICE
DISPOSITIF

(30) Priorität: 26.02.2005 DE 102005008853
(43) Veröffentlichungstag der Anmeldung: 07.11.2007
(73) Patentinhaber: AB SKF, 415 50 Göteborg (SE)
(72) Erfinder: GEBERT, Karl, 97424 Schweinfurt (DE); KOEBERLEIN, Helmut, 97618 Heustreu (DE)
(74) Vertreter: Kohl, Thomas
(86) Internationale Anmeldenummer: PCT/EP2006/001431
(87) Internationale Veröffentlichungsnummer: WO 2006/089687

(56) Entgegenhaltungen:
- EP-A- 0 297 064
- DE-A1- 2 919 486
- GB-A- 1 357 175
- US-A- 2 858 175

## Beschreibung

Die Erfindung betrifft eine Vorrichtung mit einem zum Rotieren vorgesehenen Rotorteil, das über wenigstens ein Wälzlager mit einem Statorteil verbunden ist, und mit einem Fettreservoir zum Schmieren des Wälzlagers.

Beispielsweise aus der JP 2003-048949 A ist eine Arbeitsspindel einer Werkzeugmaschine bekannt, bei der eine Spindelwelle über Kugellager in einem Außengehäuse gelagert ist. Dabei ist im Außengehäuse ein Fettreservoir zum Schmieren der Kugellager angeordnet, wobei das Fettreservoir auf einer Seite mit einem bewegbaren Kolben verschlossen ist, der zum Ausgeben von Fett in Richtung der Kugellager durch Druckluft oder einem anderen unter Druck stehenden Gas bewegt wird.

Eine weitere Vorrichtung ist aus der DE 2919486 A bekannt.

Eine Aufgabe der Erfindung ist es, eine verbesserte Vorrichtung der eingangs genannten Art zu schaffen, so dass unter anderem kleinste Fettmengen exakt steuerbar aus dem Fettreservoir an das Wälzlager ausgebbar sind.

Die Aufgabe wird durch den Gegenstand des Anspruchs 1 gelöst. Vorteilhafte Ausgestaltungen sind in den Unteransprüchen beschrieben.

Gemäß Anspruch 1 ist bei einer Vorrichtung mit einem zum Rotieren vorgesehenen Rotorteil, das über wenigstens ein Wälzlager mit einem Statorteil verbunden ist, und mit einem Fettreservoir zum Schmieren des Wälzlagers, beinhaltend folgende Merkmale:
- Ein Dehnstoffelement umfassend einen Stößel, ein Gehäuse mit einer Durchtrittsöffnung für den Stößel und ein sich unter Wärmeeinwirkung ausdehnendes Medium, so dass bei einem Erwärmen des Mediums der Stößel aus dem Gehäuse bewegt wird, und
- ein dem Dehnstoffelement zugeordnetes, betätigbares, elektrisches Heizelement, zum erzielen besagter Wärmeeinwirkung, und
- für eine Fettabgabe aus dem Fettreservoir ist der Stößel mit dem Fettreservoir entsprechend in Verbindung gestaltet.

Die Erfindung beruht dabei auf der Erkenntnis, dass gegenüber den bekannten Mechanismen zum Ausgeben von Fett aus dem Fettreservoir, insbesondere basierend auf Druckluft, mit dem Einsatz des thermisch betätigbaren Dehnstoffelements selbst geringste Fettmengen von kleiner 1 mm³ exakt steuerbar ausgegeben werden können. Damit ist gegenüber konventionellen Schmiersystemen beim erfmdungsgemäßen Schmiersystem von Vorteil, dass die in den Laufbahnbereich des Wälzlagers gelangte Fettmenge derart exakt bemessen werden kann, dass insbesondere nach einer erfolgten Nachschmierung kein erneuter Einlaufprozess durchgeführt werden muss. Dabei kann die Vorrichtung, beispielsweise eine Spindeleinheit, mit Vorteil ungeachtet einer aktuellen Drehzahl weiterbetrieben werden.

Darüber hinaus ist mit dem Dehnstoffelement mit Vorteil ein hoher Druck von größer 5 bar erzeugbar, um das Fett auch über kleine Bohrungen sicher zum Wälzlager zu befördern. Weiterhin ist von Vorteil, dass das Dehnstoffelement auch nach einer Wiederbefüllung des Fettreservoirs wieder verwendbar ist.

Mit dem erfindungsgemäßen Schmier- bzw. Nachschmiersystem ist nunmehr die Fettschmierung auch für hohe und höchste Drehzahlen und lange Fettgebrauchsdauern erschlossen. Somit sind Drehzahlkennwerte von bis zu zwei Millionen mm pro Minute und Gebrauchsdauern von bis zu 40.000 Stunden realisierbar.

In einer vorteilhaften Ausgestaltung ist das Fettreservoir als Höhlung direkt in die Vorrichtung, insbesondere deren Statorteil integriert und an einem Ende mit einem Kolben verschlossen, der zum Ausgeben des Fettes in Richtung des Wälzlagers durch das Dehnstoffelement mit einem Druck beaufschlagbar ist. Dabei wird das Schmierfett über ein Kanalsystem in das zu schmierende Wälzlager bzw. in die mehreren zu schmierenden Wälzlager gepresst.

In einer vorteilhaften Ausgestaltung sind weitere dem Schmiersystem zugehörige Komponenten vollständig in die Vorrichtung, beispielsweise die Spindeleinheit oder das Maschinensystem integriert, so dass Beschädigungen und Fremdeinflüsse mit Vorteil ausgeschlossen sind.

In einer vorteilhaften Ausgestaltung erfolgt die Schmierfettzufuhr zum Wälzlager durch in den Außenring eingearbeitete Schmierbohrungen in nächster Nähe zur Laufbahn. Dadurch werden gegenüber einer Schmierung von der Seite her mit Vorteil kein verbrauchtes Fett und keine Verschleißpartikel in das Wälzlager zurückbefördert, so dass ein erhöhter Verschleiß verhindert und eine maximal mögliche Drehzahl nicht eingeschränkt werden.

In einer vorteilhaften Ausgestaltung ist die Vorrichtung als eine Arbeitsspindel einer Werkzeugmaschine ausgebildet. Dabei fordert insbesondere die Werkzeugmaschinenindustrie, zur Steigerung der Produktivität und zur Senkung der Produktions- und Servicekosten, Spindeleinheiten mit hohen Drehzahlen und langen Gebrauchsdauern. Weiterhin sollen die Spindeleinheiten möglichst einfach aufgebaut sein und keine zusätzlichen externen Versorgungseinheiten bzw. Verbindungsleitungen bedingen. Hohe Drehzahlen, lange Gebrauchsdauern und geringe Betriebskosten lassen sich dabei mit Präzisionslagern erzielen, die bei Bedarf mit frischem Schmierfett versorgt werden. Dabei ist der Einsatz von Schrägkugel-, Zylinderrollen- und anderen Präzisionslagern mit Schmierbohrungen durch den Außenring in nächster Nähe zur Laufbahn sinnvoll. In anderen Ausführungsformen eignen sich aber auch Lager mit seitlich angebrachtem Fetteinlass.

Weiterhin ist eine Fettschmierung gegenüber einer vergleichbaren Öl-Luft-Schmierung vergleichsweise einfach, kostengünstig und von hoher Gebrauchssicherheit. Bei einer Öl-Luft-Schmierung sind dabei Partikel, die größer 1 bis maximal 3 µm sind, aus der verwendeten Luft herauszufiltern und die gefilterte Luft unter einem Druck von mindestens 5 bar zur Verfügung zu stellen. Für eine Öl-Luft-Schmierung eines Spindellagers mit beispielsweise 70 mm Bohrung werden 1,5 m³ Luft pro Betriebsstunde benötigt. Dabei umfasst eine durchschnittliche Werkzeugmaschinenspindel drei bis vier Wälzlager. Ferner ist das Öl der Öl-Luft-Schmierung derart zu filtern, dass Restpartikel größer 3 bis 5 µm Durchmesser sicher ausgesondert werden. Dadurch ergeben sich für eine derartige Öl-Luft-Schmierung, unter der Voraussetzung eines Zweischichtbetriebs, Kosten in Höhe von wenigen bis einigen tausend Euro pro Jahr. Weiterhin ist bei Erstanschaffung einer Vorrichtung zur Öl-Luft-Schmierung ein Investitionsvolumen in vergleichbarer Höhe anzusetzen. Weiterhin ist nachteilig, dass wenigstens ein Teil einer Vorrichtung zur Öl-Luft-Schmierung abseits der eigentlichen Spindeleinheit, sozusagen extern anzubringen ist und dass das Öl über Leitungen mit einem Durchmesser von 2,6 bis 4 mm über teilweise weite Strecken den Wälzlagern zuzuführen ist, wobei diese Leitungen hinsichtlich einem Abknicken, Quetschen oder Abreißen sehr empfindlich sind, was im Schadensfalle zu einem Ausfall der Spindeleinheit führt. Ferner ist die Öl-Luft-Schmierung hinsichtlich Handhabungsfehlern und Fehlfunktionen, die ebenfalls Schäden an der Spindeleinheit nach sich ziehen können, vergleichsweise empfindlich. Schließlich begrenzt der verfügbare Luftdruck sowie ein Druckabfall in den Leitungen eine Entfernung, innerhalb derer die einzelnen Teile der Vorrichtung zum Öl-Luft-Schmieren anordenbar sind, in nachteiliger Art und Weise.

Weitere Vorteile, Merkmale und Einzelheiten der Erfindung ergeben sich aus dem nachfolgend beschriebenen Ausführungsbeispiel der Erfindung anhand der Figuren. Dabei zeigen:
- Figur 1: ausschnittsweise eine perspektivische teilgeschnittene Ansicht einer Spindeleinheit mit integriertem Nachschmiersystem,
- Figur 2: eine Prinzipskizze eines Kerns des Nachschmiersystems der Figur 1, und
- Figur 3: eine Prinzipskizze von wesentlichen Elementen eines weiteren Nachschmiersystems.

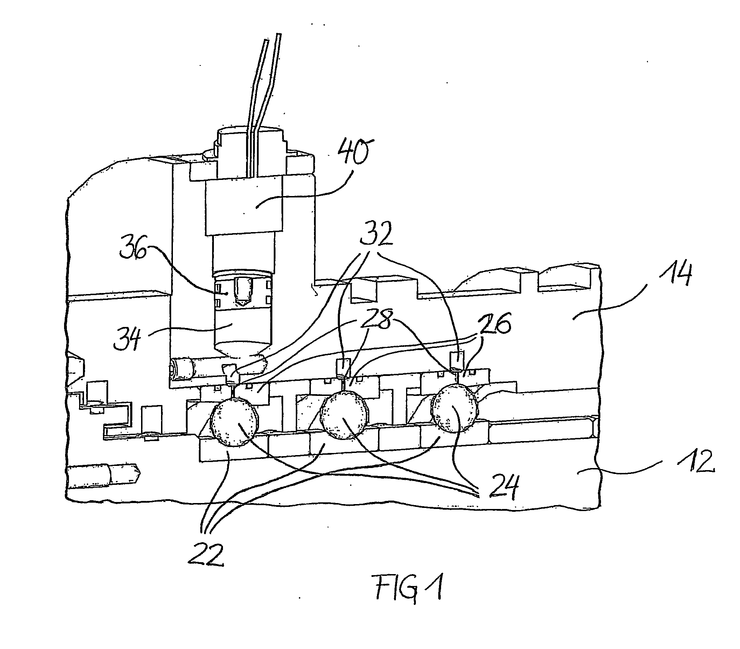

Figur 1 zeigt als ein Ausführungsbeispiel der Erfindung ausschnittsweise und in perspektivischer Ansicht einen Längsschnitt durch eine Spindeleinheit einer Werkzeugmaschine mit integriertem Nachschmiersystem. Die Spindeleinheit umfasst dabei einen zum Rotieren vorgesehenen Rotorteil 12 sowie einen bezüglich des Rotorteils 12 feststehenden Statorteil 14. Dabei ist der Rotorteil 12 über mehrere Kugellager im Statorteil 14 drehbar gelagert.

Jedes der Kugellager umfasst dabei einen Innenring 22, beispielsweise aus einem Wälzlagerstahl, als Kugeln 24 ausgebildete Wälzkörper, beispielsweise aus einer Keramik, sowie einen Außenring 26, beispielsweise ebenfalls aus Wälzlagerstahl. Dabei weist jeder der Außenringe 26 der Kugellager für ein Versorgen der Kugellager mit Schmierfett entsprechende Schmierbohrungen 28 auf, über die von einem Außenmantel der Außenringe 26 her Schmierfett direkt in die Laufbahnbereiche der Kugellager eingebracht werden kann. Dabei sind die Schmierbohrungen 28 an den Außenmänteln der Außenringe 26 der Kugellager an ein in das Statorteil 14 eingearbeitetes Kanalsystem 32 angeschlossen, das mit einem Schmierfettreservoir 34 verbunden ist.

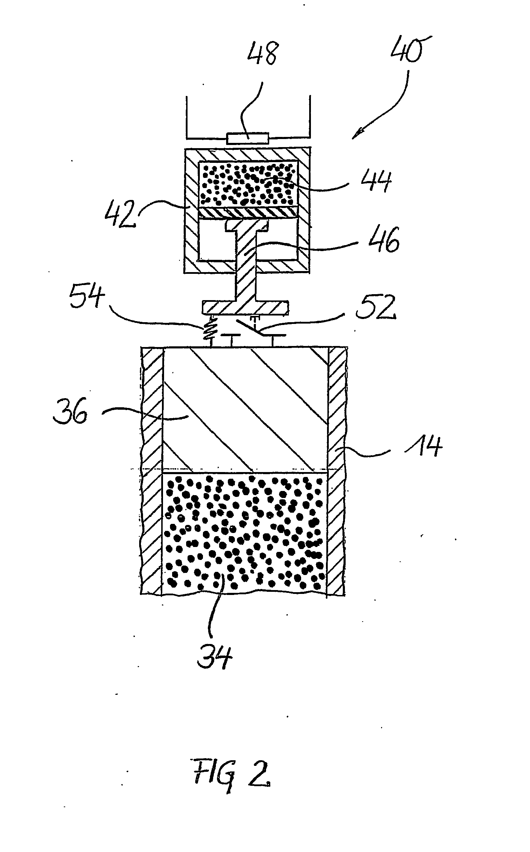

Dabei ist das Schmierfettreservoir 34 durch eine in das Statorteil 14 eingebrachte Bohrung ausgebildet. Nach außen hin ist das Schmierfettreservoir 34 durch einen in Bohrungsrichtung bewegbaren Kolben 36 verschlossen. Zum Ausgeben von Schmierfett in Richtung der Kugellager ist dabei der Kolben 36 entsprechend nach innen zu drücken. Dies wird durch ein steuerbares ebenfalls im wesentlichen in der Bohrung angeordnetes Dehnstoffelement 40 bewerkstelligt, was nachfolgend anhand der Figur 2 näher erläutert wird.

Das Dehnstoffelement 40 umfasst dabei ein Gehäuse 42, ein Medium 44, das bei Wärmeeinwirkung das Volumen vergrößert, beispielsweise ein Wachs, sowie einen Stößel 46. Derartige Dehnstoffelemente sind beilspielsweise als Massenartikel aus der Heizungstechnik bekannt. Dem Dehnstoffelement 40 zugeordnet ist dabei ein elektrisch betätigbares Heizelement 48. Der Stößel 46 des Dehnstoffelements 40 wirkt dabei auf den Kolben 36 des Fettreservoirs 34, wobei zwischen dem Stößel 46 und dem Kolben 36 ein Miniaturschalter 52 sowie eine schwache Feder 54 angeordnet sind.

Mit Aktivierung des Heizelements 48 am Beginn eines Nachschmierzyklus wird zunächst das Medium 44 erwärmt, das sich dadurch ausdehnt und den Stößel 46 aus dem Gehäuse 42 hinausdrückt, der wiederum auf den Kolben 36 des Schmierfettreservoirs 34 drückt und damit Schmierfett in Richtung der Kugellager ausgegeben wird. Dabei wird zu Beginn des Bewegens des Stößels 46 der Miniaturschalter 52 betätigt und die Feder 54 gespannt. Dabei wird mit dem Betätigen des Miniaturschalters 52 eine vorgebbare Aktivierungszeit des Heizelements 48 getriggert. Mit einem Unterbrechen einer Stromzufuhr zum Heizelement 48 verbleibt der Stößel 46 im Wesentlichen in der zuletzt erreichten Position, wobei die zwischen Stößel 46 und Kolben 36 angeordnete Feder 54 sich dann derart entspannen kann, dass sie eine Rückstellkraft zum Wiederfreigeben des Miniaturschalters 52 am Ende des Nachschmierzyklus bewirkt.

In einer anderen Ausführungsform können bei fester Verbindung zwischen dem Stößel und dem Kolben sowie bei in Bewegungsrichtung von Stößel und Kolben schwimmend ausgebildeter Lagerung des Gehäuses des Dehnstoffelements im Statorteil die Feder und der Miniaturschalter auch zwischen dem Gehäuse und dem Statorteil entsprechend angeordnet sein.

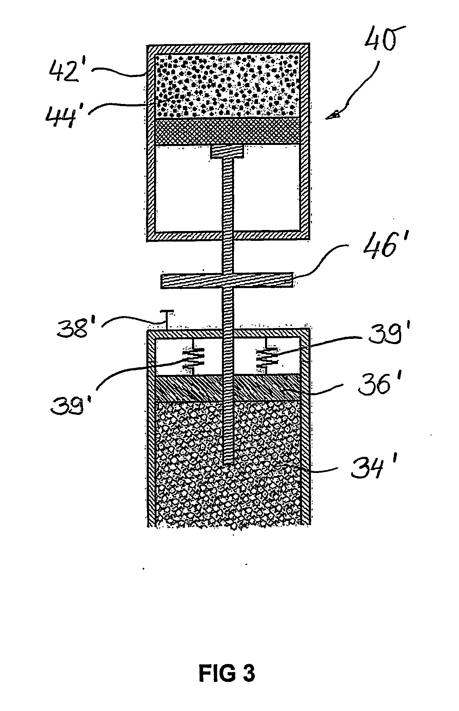

Die Figur 3 zeigt als ein weiteres Ausführungsbeispiel der Erfindung eine Prinzipskizze von wesentlichen Elementen eines weiteren Nachschmiersystems. Dabei umfasst auch das weitere Nachschmiersystem ein Dehnstoffelement 40', ähnlich dem Dehnstoffelement 40 der Figur 2, mit einem Gehäuse 42', einem Medium 44', das bei Wärmeeinwirkung das Volumen vergrößert, sowie einem Stößel 46'. Der Stößel 46' ist dabei durch einen ebenfalls bewegbaren Kolben '36' eines Fettreservoirs 34' bewegbar hindurch geführt und reicht in das Schmierfettreservoir 34' hinein, so dass durch ein Bewegen des Stößels 46' bei dem sich der Kolben 36' nicht mitbewegt Schmierfett aus dem Schmierfettreservoir 34' an die zu schmierenden Lager ausgebbar ist.

Dabei ist anders als beim Nachschmiersystem der Figur 2 das weitere Nachschmiersystem der Figur 3 für einen derartigen Betrieb vorgesehen, dass für jeden Nachschmierzyklus der Stößel 46' zur Ausgabe einer exakt definierten Menge von Schmierfett eine vorgebbare Wegstrecke bewegt wird, wobei gegenüber dem Nachschmiersystem der Figur 2 eine vergleichsweise große Hubbewegung des Stößels 46' genutzt wird. Dazu ist das weitere Nachschmiersystem der Figur 3 derart ausgebildet, dass der Stößel 46' in Bezug zum Fettreservoir 34' je Nachschmierzyklus maximal bis zum Anschlagen am Anschlag 38' bewegt wird.

Weiterhin ist eine geometrische Dimensionierung insbesondere des Fettreservoirs 34' und des Stößels 46' dahingehend gestaltet, dass in Verbindung mit dem vorgebbaren Hub des Stößels 46' je Nachschmierzyklus die exakt dosierte Schmierfettmenge ausgegeben wird. Gegenüber dem Nachschmiersystem der Figur 2 ist beim weiteren Nachschmiersystem der Figur 3 entscheidend, dass die ausgegebene Schmierfettmenge je Nachschmierzyklus somit nicht von einer vorgebbaren Zeitdauer abhängig ist, sondern konstruktiv fest vorgegeben ist, womit gegenüber dem Nachschmiersystem der Figur 2 die Zeitabhängigkeit des Nachschmiervorgangs mit Vorteil eliminiert ist.

Das Fettreservoir 34' ist dabei über den Kolben 36' und die Federn 39' derart leicht vorgespannt abgeschlossen, dass ein Hohlraum, der nach einem Ausgeben von Fett durch ein entsprechendes Bewegen des Stößels 46' und anschließendem Zurückbewegen des Stößels 46' entsteht, wieder beseitigt wird und ansonsten über die Einheit aus Kolben 36' und Federn 39' kein Fettausgeben stattfindet. Dabei kann ein entsprechendes Zurückziehen des Stößels 46' am Ende des Nachschmierzyklus durch ein entsprechend ausgebildetes Dehnstoffelement 40', aber auch durch ein entsprechend angeordnetes Federelement erzielt werden. Für eine immer exakt gleiche Schmierfettausgabemenge kann ferner in einer Ausführungsform der Anschlag 38' an die jeweilige Position des Kolbens 36' anpassbar ausgebildet sein.

In anderen Ausführungsformen des weiteren Nachschmiersystems der Figur 3 können weitere mechanische Elemente, beispielsweise Rückschlagventile, derart vorgesehen sein, dass ein sicherer Schmierfettfluss ausschließlich in Richtung Lager gewährleistet ist.

In wiederum anderen Ausführungsformen können natürlich auch beim weiteren Nachschmiersystem der Figur 3 ähnlich wie bei dem der Figur 2 zwischen Stößel 46' und dem Gehäuse des Fettreservoirs 34' ein Miniaturschalter und eine Feder angeordnet sein.

Durch die vorausgehend beschriebenen Nachschmiersysteme ist es mit Vorteil möglich, selbst geringste, exakt vorgebbare Schmierstoffmengen zu beliebigen Zeitpunkten in die Kugellager zu befördern. Dadurch ist eine Versorgung unabhängig von den Betriebsbedingungen wie Laufzeit, Temperatur, Drehzahl, Schwingungspegel usw. mit der genau benötigten Schmierstoffmenge möglich. Die Auswertung und/oder Steuerung der dabei auftretenden oder benötigten Signale kann in einer übergeordneten Steuerung erfolgen oder direkt in die Nachschmiereinheit integriert sein.

### Bezugszeichenliste

- 12: Rotorteil
- 14: Statorteil

- 22: Innenring
- 24: Kugel
- 26: Außenring
- 28: Schmierbohrung

- 32: Kanalsystem
- 34, 34': Schmierfettreservoir
- 36, 36': Kolben
- 38, 38': Anschlag
- 39': Feder

- 40, 40': Dehnstoffelement
- 42, 42': Gehäuse
- 44, 44': Medium
- 46, 46': Stößel
- 48: Heizelement

- 52: Miniaturschalter
- 54: Feder

## Patentansprüche

1. Vorrichtung mit einem zum Rotieren vorgesehenen Rotorteil (12), das über wenigstens ein Wälzlager mit einem Statorteil (14) verbunden ist, und mit einem Fettreservoir (34, 34') zum Schmieren des Wälzlagers, beinhaltend folgende Merkmale:
- Ein Dehnstoffelement (40, 40'), umfassend einen Stößel, ein Gehäuse (42, 42') mit einer Durchtrittsöffnung für den Stößel (46, 46') und ein sich unter Wärmeeinwirkung ausdehnendes Medium (44, 44'), so dass bei einem Erwärmen des Mediums (44, 44') der Stößel (46, 46') aus dem Gehäuse (42, 42') bewegt wird,
- ein dem Dehnstoffelement (40, 40') zugeordnetes, betätigbares, elektrisches Heizelement (48) zum Erzielen besagter Wärmeeinwirkung und
- für eine Fettabgabe aus dem Fettreservoir (34, 34') ist der Stößel (46, 46') mit dem Fettreservoir (34, 34') entsprechend in Verbindung stehend gestaltet.

2. Vorrichtung nach Anspruch 1, wobei das Fettreservoir (34, 34') als eine Höhlung im Statorteil (14) ausgebildet ist.

3. Vorrichtung nach Anspruch 2, wobei die Höhlung zylinderartig ausgebildet ist.

4. Vorrichtung nach einem der Ansprüche 2 oder 3, wobei die Höhlung senkrecht zu einer Drehachse des Rotors sich erstreckend ausgebildet ist.

5. Vorrichtung nach einem der Ansprüche 1 bis 4, wobei das Fettreservoir (34, 34') an einem Ende mittels eines bewegbaren Kolbens (36, 36') verschlossen ist.

6. Vorrichtung nach Anspruch 5, wobei der Kolben (36) mit dem Stößel (46) bewegbar ist.

7. Vorrichtung nach einem der Ansprüche 1 bis 6, wobei zwischen dem Stößel (46) und dem Kolben (36) oder zwischen dem Gehäuse (42, 42') und dem Statorteil (14) eine Feder (54) und ein Schalter (52) derart angeordnet sind, dass mit einem Aktivieren des Heizelements (48) die Feder (54) gespannt und der Schalter (52) betätigt werden und mit einem Deaktivieren des Heizelements (48) ein Entspannen der Feder (54) den Schalter (52) wieder freigibt.

8. Vorrichtung nach Anspruch 7, wobei der Schalter (52) und das Heizelement (48) derart miteinander verbunden sind, dass mit dem Betätigen des Schalters (52) eine vorgebbare Aktivierungszeit des Heizelements (48) getriggert wird.

9. Vorrichtung nach einem der Ansprüche 1 bis 8, wobei die Vorrichtung derart ausgebildet ist, dass für die Fettabgabe der Stößel (46') in das Fettreservoir (34') hinein bewegbar ist.

10. Vorrichtung nach Anspruch 9, wobei der Stößel (46') bis zu einem vorgebbaren Anschlag (38') in das Fettreservoir (34') hinein bewegbar ist.

11. Vorrichtung nach einem der Ansprüche 9 oder 10, wobei der Stößel (46') durch den Kolben (36') hindurch bewegbar ist.

12. Vorrichtung nach Anspruch 11, wobei der Kolben (36') derart federnd gelagert ist, dass ein Hohlraum, der nach einem Ausgeben von Fett durch ein entsprechendes Bewegen des Stößels (46') und anschließendem Zurückbewegen des Stößels (46') entsteht, wieder beseitigt wird und ansonsten über den federnd gelagerten Kolben (36') kein Fettausgeben stattfindet.

13. Vorrichtung nach einem der Ansprüche 9 bis 12, wobei zwischen dem Stößel (46') und dem Statorteil (14) eine Feder und/oder ein Schalter angeordnet sind.

14. Vorrichtung nach einem der Ansprüche 1 bis 13, wobei zwischen dem Fettreservoir (34, 34') und dem Wälzlager ein Fettleitungssystem (32) angeordnet ist.

15. Vorrichtung nach einem der Ansprüche 1 bis 14, wobei ein Außenring (26) des Wälzlagers mit wenigstens einer den Außenring (26) im wesentlichen radial durchdringenden Schmiermittelöffnung (28) ausgebildet ist.

16. Vorrichtung nach Anspruch 15, wobei ein Ende des Fettleitungssystems (32) an die Schmiermittelöffnung (28) anschließend ausgebildet ist.

17. Vorrichtung nach einem der Ansprüche 1 bis 16, wobei das Wälzlager als ein Kugellager ausgebildet ist.

18. Vorrichtung nach einem der Ansprüche 1 bis 17, wobei das Dehnstoffelement (40, 40'), das Heizelement (48) und/oder das Fettleitungssystem (32) in das Statorteil (14) integriert sind.

19. Vorrichtung nach einem der Ansprüche 1 bis 18, wobei die Vorrichtung als eine Spindeleinheit einer Werkzeugmaschine ausgebildet ist.

## Claims

1. Device with a rotor part (12) which is intended to rotate and is connected to a stator part (14) via at least one rolling bearing, and with a grease reservoir (34, 34') for lubricating the rolling bearing, containing the following features:
- an expandable substance element (40, 40'), comprising a plunger, a housing (42, 42') with a through-orifice for the plunger (46, 46'), and a medium (44, 44') expanding under the action of heat, so that, when the medium (44, 44') is heated, the plunger (46, 46') is moved out of the housing (42, 42'),
- an actuable electrical heating element (48), assigned to the expandable substance element (40, 40'), for achieving the said action of heat, and
- the plunger (46, 46') is appropriately configured so as to be connected to the grease reservoir (34, 34') for the discharge of grease out of the grease reservoir (34, 34').

2. Device according to Claim 1, the grease reservoir (34, 34') being designed as a cavity in the stator part (14).

3. Device according to Claim 2, the cavity being of cylinder-like design.

4. Device according to either one of Claims 2 and 3, the cavity being designed to extend perpendicularly with respect to an axis of rotation of the rotor.

5. Device according to one of Claims 1 to 4, the grease reservoir (34, 34') being closed at one end by means of a moveable piston (36, 36').

6. Device according to Claim 5, the piston (36) being moveable by means of the plunger (46).

7. Device according to one of Claims 1 to 6, a spring (54) and a switch (52) being arranged between the plunger (46) and the piston (36) or between the housing (42, 42') and the stator part (14), in such a way that, by the heating element (48) being activated, the spring (54) is tensioned and the switch (52) is actuated and, by the heating element (48) being deactivated, a detensioning of the spring (54) releases the switch (52) again.

8. Device according to Claim 7, the switch (52) and the heating element (48) being connected to one another in such a way that, by the switch (52) being actuated, a predeterminable activation time of the heating element (48) is triggered.

9. Device according to one of Claims 1 to 8, the device being designed in such a way that the plunger (46') can be moved into the grease reservoir (34') for the discharge of grease.

10. Device according to Claim 9, the plunger (46') being moveable into the grease reservoir (34') as far as a predeterminable stop (38').

11. Device according to either one of Claims 9 and 10, the plunger (46') being moveable through the piston (36').

12. Device according to Claim 11, the piston (36') being mounted resiliently in such a way that a void, which occurs after a discharge of grease as a result of a corresponding movement of the plunger (46') and subsequent return movement of the plunger (46'), is eliminated again, and otherwise no discharge of grease takes place via the resiliently mounted piston (36').

13. Device according to one of Claims 9 to 12, a spring and/or a switch being arranged between the plunger (46') and the stator part (14).

14. Device according to one of Claims 1 to 13, a grease conduction system (32) being arranged between the grease reservoir (34, 34') and the rolling bearing.

15. Device according to one of Claims 1 to 14, an outer ring (26) of the rolling bearing being designed with at least one lubricant orifice (28) penetrating essentially radially through the outer ring (26).

16. Device according to Claim 15, one end of the grease conduction system (32) being designed to adjoin the lubricant orifice (28).

17. Device according to one of Claims 1 to 16, the rolling bearing being designed as a ball bearing.

18. Device according to one of Claims 1 to 17, the expandable substance element (40, 40'), the heating element (48) and/or the grease conduction system (32) being integrated into the stator part (14).

19. Device according to one of Claims 1 to 18, the device being designed as a spindle unit of a machine tool.

## Revendications

1. Dispositif comprenant une partie de rotor (12) prévue pour tourner, qui est connectée à une partie de stator (14) par le biais d'au moins un palier à roulement, et comprenant un réservoir de graisse (34, 34') pour lubrifier le palier à roulement, comprenant les caractéristiques suivantes :
- un élément en matière extensible (40, 40') comprend un poussoir, un boîtier (42, 42') avec une ouverture de passage pour le poussoir (46, 46') et un milieu (44, 44') se dilatant sous l'effet de la chaleur, de sorte que lors du chauffage du milieu (44, 44'), le poussoir (46, 46') soit déplacé hors du boîtier (42, 42'),
- un élément chauffant électrique (48) commandable, associé à l'élément en matière extensible (40, 40'), pour produire ledit effet de chauffage, et
- le poussoir (46, 46') pour délivrer de la graisse hors du réservoir de graisse (34, 34'), est configuré de manière à être en liaison constante correspondante avec le réservoir de graisse (34, 34').

2. Dispositif selon la revendication 1, dans lequel le réservoir de graisse (34, 34') est réalisé sous forme de cavité dans la partie de stator (14).

3. Dispositif selon la revendication 2, dans lequel la cavité est réalisée sous forme cylindrique.

4. Dispositif selon l'une quelconque des revendications 2 ou 3, dans lequel la cavité est réalisée de manière à s'étendre perpendiculairement à un axe de rotation du rotor.

5. Dispositif selon l'une quelconque des revendications 1 à 4, dans lequel le réservoir de graisse (34, 34') est fermé à une extrémité au moyen d'un piston déplaçable (36, 36').

6. Dispositif selon la revendication 5, dans lequel le piston (36) peut être déplacé avec le poussoir (46).

7. Dispositif selon l'une quelconque des revendications 1 à 6, dans lequel, entre le poussoir (46) et le piston (36), ou entre le boîtier (42, 42') et la partie de stator (14), sont disposés un ressort (54) et un commutateur (52), de telle sorte qu'une activation de l'élément chauffant (48) tende le ressort (54) et actionne le commutateur (52), et qu'avec une désactivation de l'élément chauffant (48), une détente du ressort (54) libère à nouveau le commutateur (52).

8. Dispositif selon la revendication 7, dans lequel le commutateur (52) et l'élément chauffant (48) sont connectés l'un à l'autre de telle sorte que l'actionnement du commutateur (52) déclenche un temps d'activation prédéfinissable de l'élément chauffant (48).

9. Dispositif selon l'une quelconque des revendications 1 à 8, dans lequel le dispositif est réalisé de telle sorte que le poussoir (46') puisse être déplacé dans le réservoir de graisse (34') pour délivrer la graisse.

10. Dispositif selon la revendication 9, dans lequel le poussoir (46') peut être déplacé jusqu'à une butée prédéfinissable (38') dans le réservoir de graisse (34').

11. Dispositif selon l'une quelconque des revendications 9 ou 10, dans lequel le poussoir (46') peut être déplacé à travers le piston (36').

12. Dispositif selon la revendication 11, dans lequel le piston (36') est monté de manière élastique de telle sorte qu'un espace vide, qui se crée après la distribution de graisse par un déplacement correspondant du poussoir (46') et un retour subséquent du poussoir (46'), soit à nouveau éliminé et qu'il ne se produise par ailleurs aucune distribution de graisse par le biais du piston monté de manière élastique (36').

13. Dispositif selon l'une quelconque des revendications 9 à 12, dans lequel, entre le poussoir (46') et la partie de stator (14), sont disposés un ressort et/ou un commutateur.

14. Dispositif selon l'une quelconque des revendications 1 à 13, dans lequel entre le réservoir de graisse (34, 34') et le palier à roulement est disposé un dispositif de guidage de la graisse (32).

15. Dispositif selon l'une quelconque des revendications 1 à 14, dans lequel une bague extérieure (26) du palier à roulement est réalisée avec au moins une ouverture de lubrifiant (28) traversant essentiellement radialement la bague extérieure (26).

16. Dispositif selon la revendication 15, dans lequel une extrémité du système de guidage de la graisse (32) est réalisée à la suite de l'ouverture de lubrifiant (28).

17. Dispositif selon l'une quelconque des revendications 1 à 16, dans lequel le palier à roulement est réalisé sous forme de roulement à billes.

18. Dispositif selon l'une quelconque des revendications 1 à 17, dans lequel l'élément en matière extensible (40, 40'), l'élément chauffant (48) et/ou le système de guidage de la graisse (32) sont intégrés dans la partie de stator (14).

19. Dispositif selon l'une quelconque des revendications 1 à 18, dans lequel le dispositif est réalisé sous forme d'unité de broche d'une machine-outil.
